# EUROPEAN PATENT SPECIFICATION

(11) **EP 2 716 877 B1**
(45) Date of publication and mention of the grant of the patent: **28.11.2018**
(21) Application number: 12187009.1
(22) Date of filing: 02.10.2012
(51) Int. Cl.: F01D 17/14, F16K 3/08

(54) **Adaptive stage for high pressure drops in a turbine and turbine**
Anpassbare Stufe für Hochdruckabfälle in einer Turbine und Turbine
Étage adaptatif pour chutes de pression élevées dans une turbine et turbine

(43) Date of publication of application: 09.04.2014
(73) Proprietor: Siemens Aktiengesellschaft, 80333 München (DE)
(72) Inventor: Gretschel, Miroslav, 62800 Brno (CZ); Jankura, Peter, 635 00 BRNO (CZ)

(56) References cited:
- DD-A1- 73 042
- DE-A1- 4 425 344
- JP-A- 2000 018 007
- US-A- 5 383 763
- US-A- 5 409 351

## Description

The present invention is related to an adaptive stage for high pressure drops in a turbine, in particular in a steam turbine, comprising a fixed ring and a slide ring, which are arranged next to each other, whereby the slide ring can rotate relative to the fixed ring. Further the invention is related to a turbine, in particular a steam turbine.

A steam turbine is a device that extracts thermal energy from pressurized steam. The thermal energy is used to do mechanical work on a rotating output shaft.

A steam turbine has normally a number of rings of moving blades attached to a rotor and an equal number of fixed blades attached to the casing of the steam turbine. Pressure drops take place in a number of stages.

US 5,383,763 A discloses an adaptive stage for high pressure drops in a steam turbine, comprising a fixed ring and a slide ring, which are arranged next to each other. The slide ring can rotate relative to the fixed ring. Further, US 5,383,763 A discloses an inner axial bearing and an outer axial bearing arranged at that side of the fixed ring which is arranged next to the slide ring. A axial insert arranged at that side of the slide ring which is arranged next to the fixed ring, whereby the rolls of the inner axial bearing contacts a first area of the fixed ring and a first area of the slide ring. The rolls of the outer axial bearing contact a second area of the fixed ring.

It is an aim in steam turbines to have only a few stages and to handle large pressure drops per stage. Therefore adaptive stages are needed which can be used up to 25bar. That means it is an object of the invention to build an adaptive stage for use in a turbine, in particular in a steam turbine, which can handle a difference of pressure before and behind the adaptive stage of up to 2,21 bar.

Aforesaid object is solved by an adaptive stage with the features according to independent claim 1 and a turbine according to dependent claim 11. Further features and details of the present invention result from the sub claims, the description and the drawings. Features and details discussed with respect to the adaptive stage can also be applied to the turbine, and vice versa.

The object is solved by an adaptive stage for high pressure drops in a turbine, in particular in a steam turbine, comprising a fixed ring and a slide ring, which are arranged next to each other, whereby the slide ring can rotate relative to the fixed ring. The adaptive stage further comprises a gland arranged at the surfaces at the inner sides of the fixed ring and the slide ring, an inner axial bearing and an outer axial bearing arranged at that side of the fixed ring which is arranged next to the slide ring. The inner axial bearing is having a smaller inner diameter than the outer diameter of the outer axial bearing. A radial bearing is arranged between the inner side of the slide ring and the outer side of the gland. Further a radial insert is arranged at the outer side of the outer axial bearing and an axial insert is arranged at that side of the slide ring which is arranged next to the fixed ring, whereby the rolls of the inner axial bearing contacts a first area of the fixed ring and a first area of the slide ring, the rolls of the outer axial bearing contacts a second area of the fixed ring and a first area of the axial insert and the rolls of the radial bearing contacts the outer side of the gland and the inner side of the slide ring. The adaptive stage is further configured such that the fixed ring comprises at that side which is arranged next to the slide ring a neck with a circumferential undercut and such that the circumferential undercut is a groove between the neck and the main body of the fixed ring and the neck is a circumferential protrusion in radial direction with regard to the rotation axis of the slide ring.

Such an adaptive stage can be used for up to 25bar pressure difference between the pressure before and after the adaptive stage. This is possible because of the special shape of the neck and the circumferential undercut. The undercut is arranged between that side of the neck which is facing away from the slide ring and the main body of the fixed ring. This special neck and the undercut are designed for high forces and temperatures. Without such a neck it is not possible to use pressure differences over 2,21 bar between the pressure before and after the adaptive stage. The adaptive stage can be operated with up to 25bar pressure drops and temperatures up to 505°C.

The fixed ring is arranged at the gland. The radial bearing is arranged at the inner side of the slide ring. The rolls of the radial bearing are in rotatable contact to the gland. The inner axial bearing is located at the side of the fixed ring which is facing the slide ring near. The inner axial bearing is arranged neat the gland. The rolls of the inner axial bearing rotatable contacts a side of the slide ring. Further the outer axial ring is arranged at the same side of the fixed ring like the inner axial bearing. The outer axial bearing has an inner diameter which is larger than the outer diameter of the inner axial bearing. Because of the bearings the slide ring can rotate relative to the fixed ring.

According to a preferred development of the invention an advantageous adaptive stage is characterised in that the circumferential undercut has an opening in direction to the outer axial bearing. The end face of the neck and the opening of the undercut are arranged next to the rolls of the outer axial bearing without touching the rolls. But the difference between the rolls of the outer -axial bearing and the end face of the neck is very small. The outer axial bearing is hold by the radial insert which covers the outer axial bearing.

Advantageously the slide, ring comprises a mounting area for fixing the axial insert at the slide ring. Preferred is an adaptive, stage wherein the axial insert is arranged in a circumferential groove arranged at that side of the slide ring which is facing the fixed ring.

The radial height of the axial insert advantageously corresponds to the height of the rolls of the outer axial bearing.

Further, an adaptive stage is preferred, which is characterized in that the neck has a rectangular cross section. The radial end face of the neck is arranged parallel to the rotation axis of the slide ring. The undercut has at all positions a smaller diameter than the circumferential end face of the neck.

Preferred is an adaptive stage, wherein the undercut has a triangular-shaped or in particular triangular-shaped cross section. Alternative to that an adaptive stage is preferred, wherein the undercut has a hook-shaped or in particular hook-shaped cross section. In both embodiments of the undercut the diameter of the undercut decreases in direction to the neck.

According to a further preferred development of the invention an advantageous adaptive stage is characterised in that the end face of the neck and the opening of the undercut are arranged along the diameter of the rolls of the outer axial bearing.

Further, an adaptive stage is preferred, which is characterized in that the inner axial bearing comprises two or more rolls in one row and/or the outer axial bearing comprises two or more rolls in one row and/or the -radial bearing comprises two or more rolls in one row. The axial bearings and the radial bearing are preferably thrust needle roller. Advantageously the cage of the bearings is open to the inside of the bearings. It is possible that two or more rolls are arranged in one row. According to a preferred development of the invention an advantageous adaptive stage is characterised in that the outer axial bearing is a thrust needle roller with three rolls per row, the inner axial bearing is a thrust needle roller with two rolls per row and the radial bearing is a thrust needle roller with one roll per row.

Preferred is an adaptive stage, wherein the fixed ring, the slide ring and the axial insert each comprises a high-temperature steel, in particular X22CrMoV12-1-steel. That means, at least the surfaces of the fixed ring, the slide ring and the axial insert should consist of X22CrMoV12-1-steel. Preferred is an adaptive stage, wherein the fixed ring, the slide ring and the axial insert each consists of a high-temperature steel, in particular of X22CrMoV12-1-steel. X22CrMoV12-1-steel has very good properties at higher temperatures, in particular temperatures between 400°C to 505°C. Material X22CrMoV12-1 has very good material properties by higher temperature like 400°C to 505°C. The yield ultimate of such a material is 790MPa by 20°C and 485MPa by 500°C and the yield strength is 590MPa by 20°C and 345MPa by 500°C. Thus, a fixed ring, a slide ring and a axial insert are preferred which comprise weld deposits with a hardness of 40HRC by 10°C to 30°C, in particular 20°C, or approximately of 40HRC by 10°C to 30°C, in particular 20°C, and a hardness of 33HRC by 570°C to 630°C, in particular 600°C, or approximately of 33HRC by 570°C to 630°C, in particular 600°C.

The material X22CrMoV12-1 is needed in the form of forging. Therefore the fixed ring, the slide ring and the axial insert are preferably in the form of forging. Other material is also possible, but as well with the above mentioned properties in the form of forging.

According to a further preferred development of the invention an advantageous adaptive stage is characterised in that the first area of the fixed ring, the second area of the fixed ring, the first area of the slide ring and the first area of the axial insert each comprises a weld deposit which is made with FOX CELSIT V. FOX Celsit V has a hardness of 40HRC by 20°C and 33HRC by 600°C. For the weld deposits is a high hardness and an immunity against abrasion required, which can be reached with required FOX Celsit V. The rolls of the bearings of the adaptive stage are arranged in such a way that they contact the weld deposits.

According to a second aspect of the invention the object is solved by a turbine, in particular steam turbine, comprising at least one adaptive stage according to the first aspect of the invention, in particular according to one of the claims 1 to 10. The turbine has the same advantages which have been discussed in detail as to the adaptive stage according to the first aspect of the invention.

The present invention is further described with respect to the accompanying figures. It is shown schematically in:
- Figure 1: in a perspective view an adaptive stage of a turbine,
- Figure 2: in a cross section an adaptive stage of a turbine,
- Figure 3: in a cross section a slide ring of an adaptive stage with a radial bearing and an axial insert,
- Figure 4: a cross section a fixed ring of an adaptive stage with two axial bearings and a radial insert,
- Figure 5: in a perspective view cross section the slide ring according fig. 3,
- Figure 6: in a cross section the fixed ring according fig. 3,
- Figure 7: in a perspective view a section of a fixed ring of an adaptive stage with weld deposits,
- Figure 8: in a perspective view a fixed ring of an adaptive stage with weld deposits,
- Figure 9: in a perspective view a section of a slide ring of an adaptive stage with weld deposits,
- Figure 10: in a perspective view a slide ring of an adaptive stage with weld deposits,
- Figure 11: in a perspective view a section of a slide ring, an axial insert and a weld deposit at the axial insert of an adaptive stage,
- Figure 12: in a cross section a fixed ring of an adaptive stage,
- Figure 13: in a cross section the neck and undercut of the fixed ring according fig. 12,
- Figure 14: in a cross section the neck and undercut of a second fixed ring of an adaptive stage,
- Figure 15: in a cross section the neck and undercut of a third fixed ring of an adaptive stage,
- Figure 16: in a cross section the neck and undercut of a fourth fixed ring of an adaptive stage,
- Figure 17: a part of a cage of an axial bearing and
- Figure 18: a part of a cage of a radial bearing.

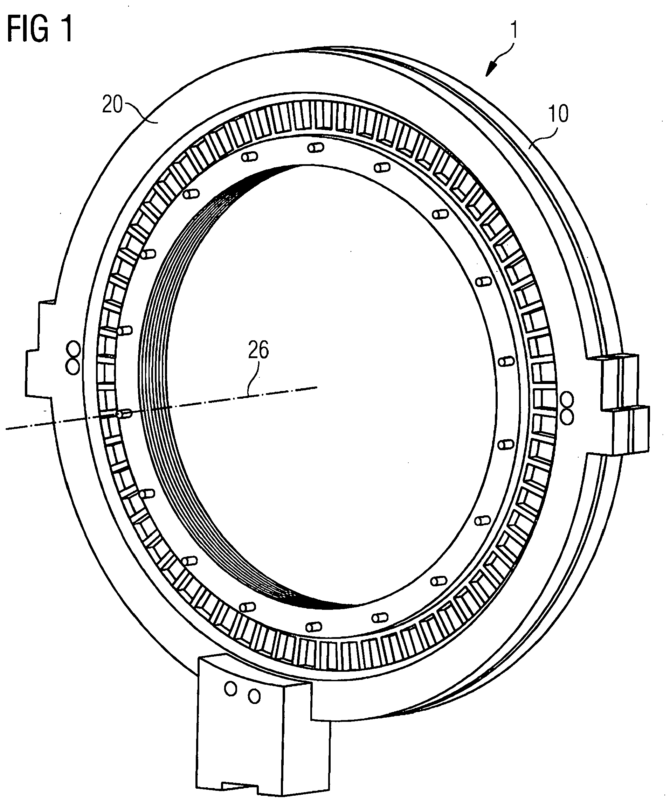

Fig. 1 shows schematically in a perspective view an adaptive stage 1 for high pressure drops in a turbine, in particular in a steam turbine. The adaptive stage 1 comprises a fixed ring 10 and a slide ring 20, which are arranged next to each other, whereby the slide ring 20 can rotate relative to the fixed ring 10. The slide ring 20 can rotate around the rotations axis 26.

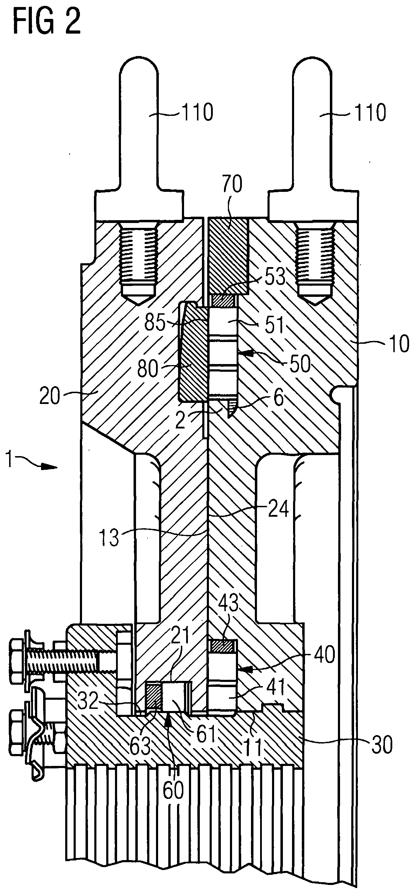

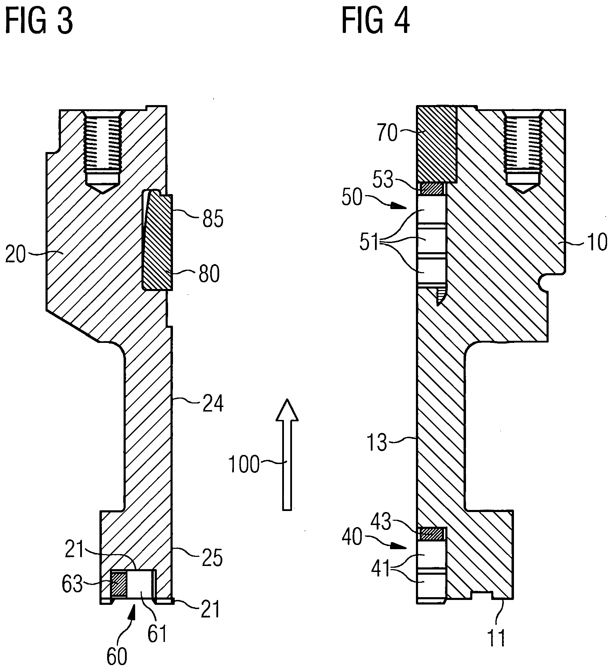

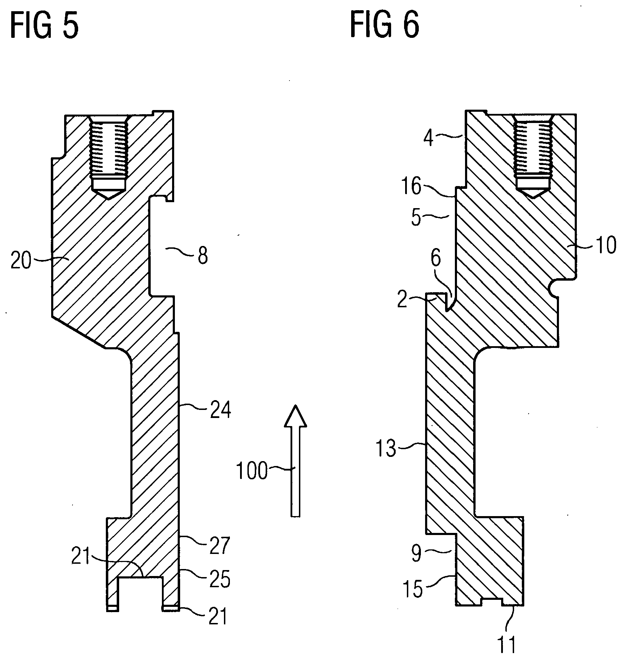

Fig. 2 shows schematically in a cross section the adaptive stage 1 according fig. 1. The slide ring 20 and the fixed ring 10 are arranged next to each other, whereby the slide ring 20 can rotate relative to the fixed ring 10. The adaptive stage 1 comprises a gland 30 which is arranged at the surfaces at the inner sides 11, 21 of the fixed ring 10 and the slide ring 20. An inner axial bearing 40 and an outer axial bearing 50 are arranged at that side of the fixed ring 10 which is arranged next to the slide ring 20. The inner axial bearing 40 has a smaller inner diameter than the outer diameter of the outer axial bearing 50. A radial bearing 60 is arranged between the inner side 21 of the slide ring 20 and the outer side 32 of the gland 30. A radial insert 70 covers the outer axial bearing 50 and an axial insert 80 is arranged in a recess of the slide ring 20. The rolls 41 of the inner axial bearing 40 contacts a first area 15, shown in fig. 6, of the fixed ring 10 and a first area 25, shown in fig. 3 and 5, of the slide ring 20. The rolls 51 of the outer axial bearing 50 contacts a second area 16, shown in fig. 6, of the fixed ring 10 and a first area 85, shown in fig. 3, of the axial insert 80 and the rolls 61 of the radial bearing 60 contacts the outer side 32, shown in fig. 2, of the gland 30 and the inner side 21, shown in fig. 3, of the slide ring 20. The fixed ring 10 of the adaptive stage 1 comprises at that side which is arranged next to the slide ring 20 a neck 2 with a circumferential undercut 6. Such an adaptive stage 1 can be used for up to 25bar pressure difference between the pressure before and after the adaptive stage 1.

Fig. 3 shows schematically in a cross section the slide ring 20 of the adaptive stage 1 according fig. 2 with a radial bearing 60 and an axial insert 80. Fig. 5 shows schematically in a cross section the slide ring 20 of the adaptive stage 1 according fig. 2 without the radial bearing 60 and an axial insert 80. Fig. 4 shows schematically in a cross section the fixed ring 10 of the adaptive stage 1 according fig. 2 with two axial bearings 40, 50 and a radial insert 70. Fig. 6 shows schematically in a cross section the fixed ring 10 of the adaptive stage 1 according fig. 2 without the two axial bearings 40, 50 and a radial insert 70. Reference sign 100 describes the radial direction of the adaptive stage 1. The rolls 61 of the radial bearing 60 can rotatably contact the gland 30, the rolls 41 of the inner axial bearing 40 can contact the first area 25 of slide ring 20 and the rolls 51 of the outer axial bearing 50 can contact the first area 85 of axial insert 80, see fig. 3 and 4.

In Fig. 6 the circumferential neck 2 and the circumferential undercut 6 are shown as well.

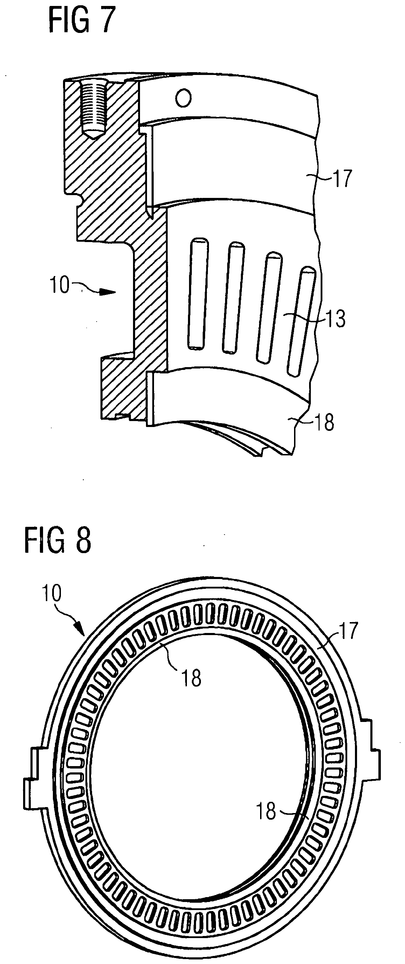

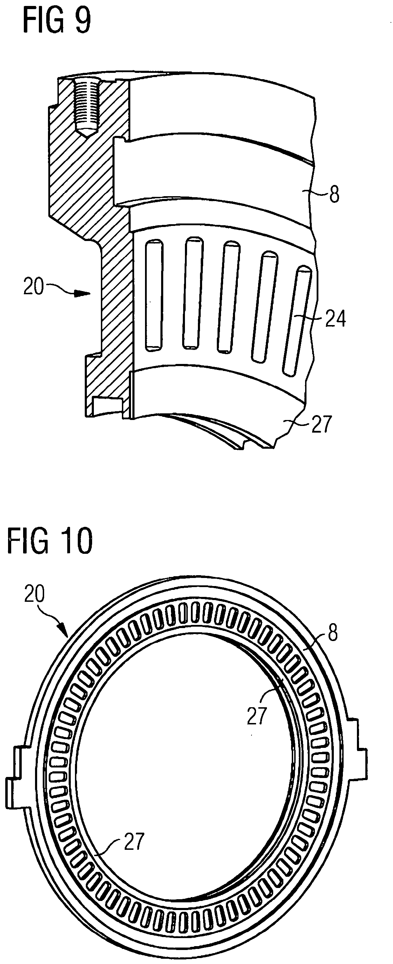

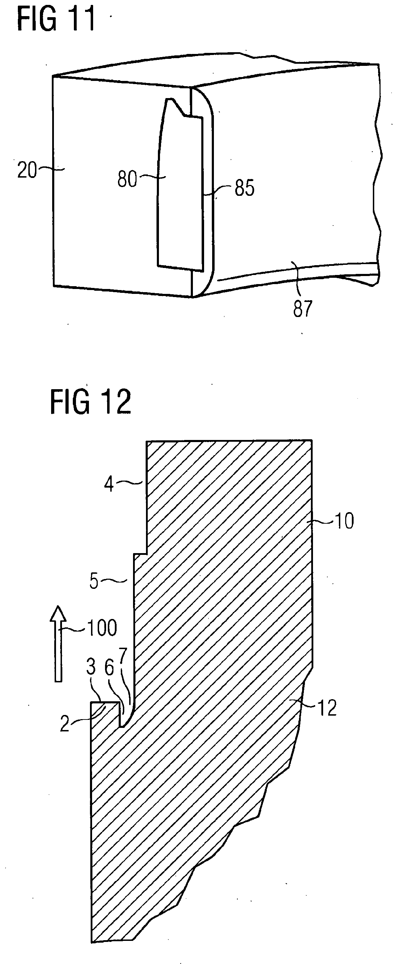

Fig. 7 shows schematically in a perspective view a section of a fixed ring 10 of an adaptive stage 1 with weld deposits 17, 18 at the side 13 of the fixed ring 10. In fig. 8 the complete fixed ring 10 comprising weld deposits 17, 18 is shown schematically in a perspective view. Fig. 9 shows schematically in a perspective view a section of a slide ring 20 of an adaptive stage 1 with a weld deposit 27 at the side 24 of the slide ring 20. In fig. 10 the complete slide ring, 20 comprising a weld deposit 27 is shown schematically in a perspective view. Fig. 11 shows in a perspective view a section of a slide ring 20, an axial insert 80 and a weld deposit 87 at the axial insert 80 of an adaptive stage 1.

That means, the first area 15 of the fixed ring 10, the second area 16 of the fixed ring 10, the first area 25 of the slide ring 20 and the first area 85 of the axial insert 80 each comprise a weld deposit 17, 18, 27, 87 which is made with FOX CELSIT V. A weld deposit with such a material has a high hardness and immunity against abrasion. The rolls 41, 51, 61 of the bearings 40, 50, 60 of the adaptive stage 1 are arranged in such a way that they contact the weld deposits 17, 18, 27, 87. The weld deposits 17, 18, 27, 87 have advantageously a hardness of 40HRC by 20°C and a hardness of 33HRC by 600°C.

The fixed ring 10, the slide ring 20 and at least the axial insert 80 comprise or better consist of a high-temperature steel, in particular X22CrMoV12-1-steel. Such a material has very good material properties by higher temperature like 490°C to 505°C. The hardness of 40HRC by 10°C to 30°C, in particular 20°C, or approximately of 40HRC by 10°C to 30°C, in particular 20°C, and a hardness of 33HRC by 570°C to 630°C, in particular 600°C, or approximately of 33HRC by 570°C to 630°C, in particular 600°C.

The fixed ring 10, the slide ring 20 and at least the axial insert 80 are in the form of forging.

Fig. 12 shows in a cross section a fixed ring 10 of an adaptive stage 1. The circumferential undercut 6 is arranged between that side of the neck 2 which is facing away from the slide ring 20 and the main body 12 of the fixed ring 10. This special neck 2 and the special undercut 6 are designed for high forces and temperatures. Without such a neck it is not possible to use pressure differences over 16bar between the pressure before and after the adaptive stage 1. The adaptive stage can be operated with up to 25bar pressure drops and temperatures from 500°C till more than 600°C. The circumferential undercut 6 has an opening 7 in radial direction 100 that means to the outer axial bearing 50. The circumferential undercut 6 is a groove between the neck 2 and the main body 12 of the fixed ring 10. The end face 3 of the neck 2 and the opening 7 of the undercut 6 are arranged with a small difference next to the rolls 51 of the outer axial bearing 50. The neck 2 has a rectangular cross section. The radial end face 3 of the neck 2 is arranged parallel to the longitudinal axis of the fixed ring 10. The undercut 6 has at all positions a smaller diameter than the circumferential end face 3 of the neck 2.

Preferred is an adaptive stage, wherein the undercut has a triangular-shaped or in particular triangular-shaped cross section. Alternative to that an adaptive stage is preferred, wherein the undercut has a hook-shaped or in particular hook-shaped cross section. In both embodiments of the undercut the diameter of the undercut decreases in direction to the neck.

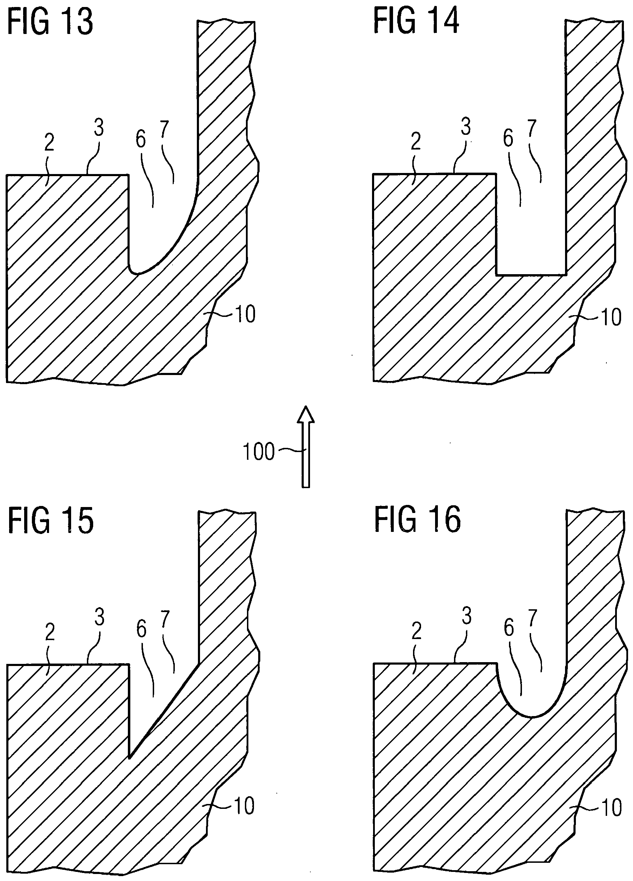

Fig. 13 shows in a cross section the neck 2 and circumferential undercut 6 of the fixed ring according fig. 12. Fig. 14 to 16 show each in a cross section the neck 2 and circumferential undercut 6 of other fixed rings 10. In fig. 14 the circumferential undercut 6 and the groove, respectively, has a rectangular cross section. In fig. 15 the circumferential, undercut 6 and the groove, respectively, has a triangular cross section. In fig. 16 the circumferential undercut 6 and the groove, respectively, has an arched cross section. Preferred is an adaptive stage, wherein the circumferential undercut 6 has a hook-shaped or in particular hook-shaped cross section, like disclosed in fig. 12. The diameter of the circumferential undercut 6 decreases in direction to the neck 2.

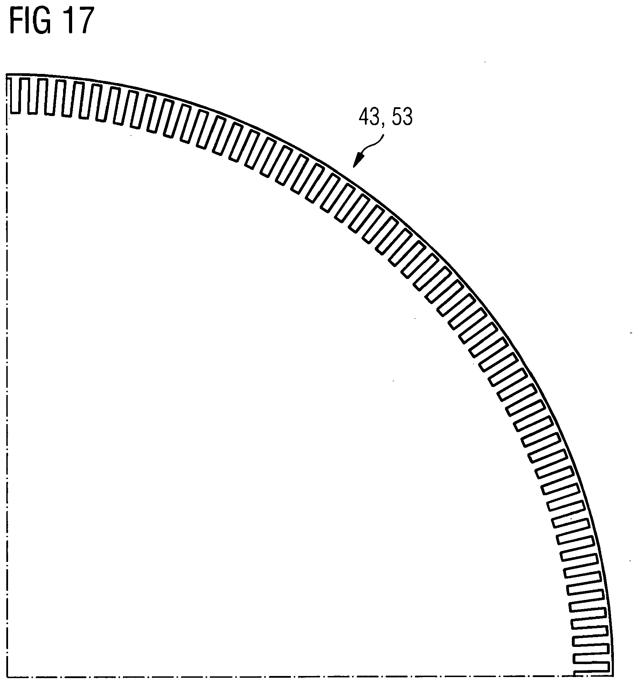

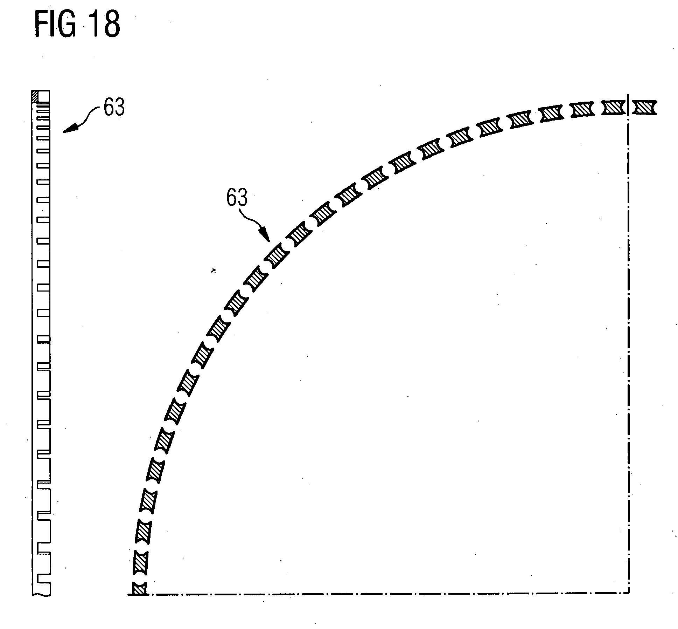

Fig. 17 shows schematically a part of a cage 43, 53 of an axial bearing 40, 50 and fig. 18 shows schematically a part of a Cage 63 of a radial bearing 60.

## Claims

1. Adaptive stage (1) for high pressure drops in a turbine, in particular in a steam turbine, comprising a fixed ring (10) and a slide ring (20), which are arranged next to each other, whereby the slide ring (20) can rotate relative to the fixed ring (10), a gland (30) arranged at the surfaces at the inner sides (11, 21) of the fixed ring (10) and the slide ring (20), an inner axial bearing (40) and an outer axial bearing (50) arranged at that side (13) of the fixed ring (10) which is arranged next to the slide ring (20), the inner axial bearing (40) having a smaller inner diameter than the outer diameter of the outer axial bearing (50), a radial bearing (60) arranged between the inner side (21) of the slide ring (20) and the outer side (32) of the gland (30), a radial insert (70) arranged at the outer side (52) of the outer axial bearing (50) and an axial insert (80) arranged at that side (24) of the slide ring (20) which is arranged next to the fixed ring (20), whereby the rolls (41) of the inner axial bearing (40) contact a first area (15) of the fixed ring (10) and a first area (25) of the slide ring (20), the rolls (52) of the outer axial bearing (50) contact a second area (16) of the fixed ring (10) and a first area (85) of the axial insert (80) and the rolls (61) of the radial bearing (60) contact the outer side (32) of the gland (30) and the inner side (21) of the slide ring (20), and wherein the fixed ring (10) comprises at that side which is arranged next to the slide ring (20) a neck (2) with a circumferential undercut (6), wherein the neck (2) is a circumferential protrusion in radial direction with regard to the rotation axis of the slide ring (20) arid wherein the circumferential undercut (6) is a groove between the neck (2) and the main body of the fixed ring (10).

2. Adaptive stage (1) according to claim 1, **characterized in that** the circumferential undercut (6) has an opening (7) in direction to the outer axial bearing (50).

3. Adaptive stage (1) according claim 1 or 2, **characterized in that** the neck (2) has a rectangular cross section.

4. Adaptive stage (1) according to any of the preceding claims, **characterized in that** the undercut (6) has a triangular-shaped or in particular triangular-shaped cross section.

5. Adaptive stage (1) according to any of the preceding claims 1 to 4, **characterized in that** the undercut (6) has a hook-shaped or in particular hook-shaped cross section.

6. Adaptive stage (1) according to any of the preceding claims, **characterized in that** the end face (3) of the neck (2) and the opening (7) of the undercut (6) are arranged along the diameter of the rolls (42) of the outer axial bearing (50).

7. Adaptive stage (1) according to any of the preceding claims, **characterized in that** the inner axial bearing (40) comprises two or more rolls (41) in one row and/or the outer axial bearing (50) comprises two or more rolls (51) in one row and/or the radial bearing (60) comprises two or more rolls (61) in one row.

8. Adaptive stage (1) according to any of the preceding claims, **characterized in that** the fixed ring (10), the slide ring (20) and the axial insert (80) each comprises a high-temperature steel, in particular X22CrMoV12-1-steel.

9. Adaptive stage (1) according to any of the preceding claims, **characterized in that** the first area (15) of the fixed ring (10), the second area (16) of the fixed ring (10), the first area (25) of the slide ring (20) and the first area (85) of the axial insert (80) each comprises a weld deposit (17, 18, 27, 87) which is made with FOX CELSIT V.

10. Adaptive stage (1) according to claim 9, **characterized in that** the weld deposits (17, 18, 27, 87) have a hardness of 40HRC by 10°C to 30°C, in particular 20°C, or approximately of 40HRC by 10°C to 30°C, in particular 20°C, and a hardness of 33HRC by 570°C to 630°C, in particular 600°C, or approximately of 33HRC by 570°C to 630°C, in particular 600°C.

11. Turbine, in particular steam turbine, comprising at least one adaptive stage (1) according to any of the preceding claims.

## Patentansprüche

1. Adaptive Stufe (1) für starke Druckabfälle in einer Turbine, insbesondere einer Dampfturbine, mit einem Festring (10) und einem Gleitring (20), die nebeneinander angeordnet sind, wobei sich der Gleitring (20) in Bezug auf den Festring (10) drehen kann, einer Stopfbuchse (30), die an den Flächen an den Innenseiten (11, 21) des Festrings (10) und des Gleitrings (20) angeordnet ist, einem inneren Axiallager (40) und einem äußeren Axiallager (50), die auf der Seite (13) des Festrings (10) angeordnet sind, welche neben dem Gleitring (20) angeordnet ist, wobei der Innendurchmesser des inneren Axiallagers (40) kleiner ist als der Außendurchmesser des äußeren Axiallagers (50), einem Radiallager (60), das zwischen der Innenseite (21) des Gleitrings (20) und der Außenseite (32) der Stopfbuchse (30) angeordnet ist, einem radialen Einsatz (70), der auf der Außenseite (52) des äußeren Axiallagers (50) angeordnet ist, und einem axialen Einsatz (80), der auf der Seite (24) des Gleitrings (20) angeordnet ist, die neben dem Festring (20) angeordnet ist, wobei die Walzen (41) des inneren Axiallagers (40) einen ersten Bereich (15) des Festrings (10) und einen ersten Bereich (25) des Gleitrings (20) berühren, die Walzen (52) des äußeren Axiallagers (50) einen zweiten Bereich (16) des Festrings (10) und einen ersten Bereich (85) des axialen Einsatzes (80) berühren und die Walzen (61) des Radiallagers (60) die Außenseite (32) der Stopfbuchse (30) und die Innenseite (21) des Gleitrings (20) berühren und wobei der Festring (10) auf der Seite, die neben dem Gleitring (20) angeordnet ist, einen Hals (2) mit einer umlaufenden Hinterschneidung (6) umfasst, wobei es sich bei dem Hals (2) um einen in Bezug auf die Rotationsachse des Gleitrings (20) in radialer Richtung umlaufenden Vorsprung und bei der umlaufenden Hinterschneidung (6) um eine Nut zwischen dem Hals (2) und dem Hauptteil des Festrings (10) handelt.

2. Adaptive Stufe (1) nach Anspruch 1, **dadurch gekennzeichnet, dass** die umlaufende Hinterschneidung (6) in Richtung des äußeren Axiallagers (50) eine Öffnung (7) aufweist.

3. Adaptive Stufe (1) nach Anspruch 1 oder 2, **dadurch gekennzeichnet, dass** der Hals (2) einen rechteckigen Querschnitt aufweist.

4. Adaptive Stufe (1) nach einem der vorhergehenden Ansprüche, **dadurch gekennzeichnet, dass** die Hinterschneidung (6) einen dreieckigen oder insbesondere einen dreieckigen Querschnitt aufweist.

5. Adaptive Stufe (1) nach einem der vorhergehenden Ansprüche 1 bis 4, **dadurch gekennzeichnet, dass** die Hinterschneidung (6) einen hakenförmigen oder insbesondere einen hakenförmigen Querschnitt aufweist.

6. Adaptive Stufe (1) nach einem der vorhergehenden Ansprüche, **dadurch gekennzeichnet, dass** die Stirnfläche (3) des Halses (2) und die Öffnung (7) der Hinterschneidung (6) an dem Durchmesser der Walzen (42) des äußeren Axiallagers (50) entlang angeordnet sind.

7. Adaptive Stufe (1) nach einem der vorhergehenden Ansprüche, **dadurch gekennzeichnet, dass** das innere Axiallager (40) zwei oder mehr Walzen (41) in einer Reihe und/oder das äußere Axiallager (50) zwei oder mehr Walzen (51) in einer Reihe und/oder das Radiallager (60) zwei oder mehr Walzen (61) in einer Reihe umfasst.

8. Adaptive Stufe (1) nach einem der vorhergehenden Ansprüche, **dadurch gekennzeichnet, dass** der Festring (10), der Gleitring (20) und der axiale Einsatz (80) jeweils einen hochwarmfesten Stahl, insbesondere X22CrMoV12-1-Stahl, umfassen.

9. Adaptive Stufe (1) nach einem der vorhergehenden Ansprüche, **dadurch gekennzeichnet, dass** der erste Bereich (15) des Festrings (10), der zweite Bereich (16) des Festrings (10), der erste Bereich (25) des Gleitrings (20) und der erste Bereich (85) des Axialeinsatzes (80) jeweils ein Schweißgut (17, 18, 27, 87) umfasst, das mit FOX CELSIT V hergestellt ist.

10. Adaptive Stufe (1) nach Anspruch 9, **dadurch gekennzeichnet, dass** das Schweißgut (17, 18, 27, 87) eine Härte von 40 HRC bei 10°C bis 30°C, insbesondere 20°C, oder etwa 40 HRC bei 10°C bis 30°C, insbesondere 20°C, und eine Härte von 33 HRC bei 570°C bis 630°C, insbesondere 600°C, oder etwa 33 HRC bei 570°C bis 630°C, insbesondere 600°C aufweist.

11. Turbine, insbesondere Dampfturbine, mit mindestens einer adaptiven Stufe (1) nach einem der vorhergehenden Ansprüche.

## Revendications

1. Étage adaptatif (1) pour des chutes de pression élevées au sein d'une turbine, en particulier au sein d'une turbine à vapeur, comprenant une bague fixe (10) et une bague coulissante (20) qui sont agencées à proximité l'une de l'autre, ladite bague coulissante (20) pouvant tourner par rapport à la bague fixe (10), un presse-garniture (30) agencé au niveau des surfaces situées au niveau des côtés intérieurs (11, 21) de la bague fixe (10) et de la bague coulissante (20), un palier axial intérieur (40) et un palier axial extérieur (50) agencés au niveau dudit côté (13) de la bague fixe (10) qui est agencée au voisinage immédiat de la bague coulissante (20), le palier axial intérieur (40) présentant un diamètre intérieur inférieur au diamètre extérieur du palier axial extérieur (50), un palier radial (60) agencé entre le côté intérieur (21) de la bague coulissante (20) et le côté extérieur (32) du manchon (30), un insert radial (70) agencé au niveau du côté extérieur (52) du palier axial extérieur (50) et un insert axial (80) agencé au niveau dudit côté (24) de la bague coulissante (20) qui est agencé au voisinage immédiat de la bague fixe (20), les roulements (41) du palier axial intérieur (40) venant en contact avec une première zone (15) de la bague fixe (10) et avec une première zone (25) de la bague coulissante (20), les roulements (52) du palier axial extérieur (50) viennent en contact avec une deuxième zone (16) de la bague fixe (10) et avec une première zone (85) de l'insert axial (80) et les roulements (61) du palier radial (60) venant en contact avec le côté extérieur (32) du manchon (30) et avec le côté intérieur (21) de la bague coulissante (20), et dans lequel la bague fixe (10) comprend, au niveau dudit côté qui est agencé au voisinage immédiat de la bague coulissante (20), un collet (2) muni d'une gorge circonférentielle (6), dans lequel le collet (2) est une saillie circonférentielle dans la direction radiale par rapport audit axe de rotation de la bague coulissante (20) et dans lequel la gorge circonférentielle (6) est une rainure située entre le collet (2) et le corps principal de la bague fixe (10).

2. Étage adaptatif (1) selon la revendication 1, **caractérisé en ce que** la gorge circonférentielle (6) présente une ouverture (7) dirigée vers le palier axial extérieur (50).

3. Étage adaptatif (1) selon la revendication 1 ou 2, **caractérisé en ce que** le collet (2) présente une section transversale rectangulaire.

4. Étage adaptatif (1) selon l'une quelconque des revendications précédentes, **caractérisé en ce que** la gorge (6) présente une section transversale de forme triangulaire ou en particulier de forme triangulaire.

5. Étage adaptatif (1) selon l'une quelconque des revendications 1 à 4, **caractérisé en ce que** la gorge (6) présente une section transversale en forme de crochet ou en particulier en forme de crochet.

6. Étage adaptatif (1) selon l'une quelconque des revendications précédentes, **caractérisé en ce que** la face terminale (3) du collet (2) et l'ouverture (7) de la gorge (6) sont agencées le long du diamètre des roulements (42) du palier axial extérieur (50).

7. Étage adaptatif (1) selon l'une quelconque des revendications précédentes, **caractérisé en ce que** le palier axial intérieur (40) comprend deux ou plus de deux roulements (41) sur une rangée et/ou le palier axial extérieur (50) comprend deux ou plus de deux roulements (51) sur une rangée et/ou le palier radial (60) comprend deux ou plus de deux roulements (61) sur une rangée.

8. Étage adaptatif (1) selon l'une quelconque des revendications précédentes, **caractérisé en ce que** la bague fixe (10), la bague coulissante (20) et l'insert axial (80) sont respectivement constitués d'un acier haute température, en particulier d'un acier X22CrMoV12-1.

9. Étage adaptatif (1) selon l'une quelconque des revendications précédentes, **caractérisé en ce que** la première zone (15) de la bague fixe (10), la deuxième zone (16) de la bague fixe (10), la première zone (25) de la bague coulissante (20) et la première zone (85) de l'insert axial (80) comprennent respectivement un dépôt de soudure (17, 18, 27, 87) qui est constitué de FOX CELSIT V.

10. Étage adaptatif (1) selon la revendication 9, **caractérisé en ce que** les dépôts de soudure (17, 18, 27, 87) présentent une dureté de 40 HRC entre 10°C et 30°C, en particulier à 20°C, ou approximativement de 40 HRC entre 10°C et 30°C, en particulier à 20°C, et une dureté de 33 HRC entre 570°C et 630°C, en particulier à 600°C, ou approximativement de 33 HRC entre 570°C et 630°C, en particulier à 600°C.

11. Turbine, en particulier turbine à vapeur, comprenant au moins un étage adaptatif (1) selon l'une quelconque des revendications précédentes.
